**Europäisches Patentamt**

**European Patent Office**

**Office européen des brevets**

(19)

(11) Publication number: **0 072 702**

**A1**

(12)

# EUROPEAN PATENT APPLICATION

(21) Application number: **82304350.0**

(22) Date of filing: **18.08.82**

(51) Int. Cl.³: **A 01 K 1/02**

(30) Priority: **18.08.81 GB 8125244**

(43) Date of publication of application:
**23.02.83 Bulletin 83/8**

(84) Designated Contracting States:
**AT BE DE FR GB IT NL SE**

(71) Applicant: **Loader, Charles, Sidney**
**Maranatha Wheal Rose**
**Scorrier Redruth Cornwall(GB)**

(72) Inventor: **Loader, Charles, Sidney**
**Maranatha Wheal Rose**
**Scorrier Redruth Cornwall(GB)**

(74) Representative: **Bryer, Kenneth Robert**
**Coosehecca Chacewater**
**Truro TR4 8QU Cornwall(GB)**

(54) A confinement chamber for use in farrowing.

(57) A confinement chamber (11) for use in farrowing is disclosed. The confinement chamber (11) has upright side front and rear walls and the front wall (12) has an opening (22) with an entrance closure comprising a flap (24) or an array of pivoted fingers, which allows piglets to enter the enclosure but prevents their escape. A ramp (26) or other piglet conveying means is positioned between the sow and the entrance to convey piglets into the chamber (11) as they are born. A ventilated cover (33) retains heat to maintain a suitable temperature within the chamber.

FIG 2

EP 0 072 702 A1

## A Confinement Chamber for use in Farrowing

The present invention relates to a confinement chamber for use in farrowing, and particularly to a chamber of the type referred to as a Farrowing Box in my earlier United Kingdom Patent Application No. 78.33047. In that earlier specification I disclosed a box which is adapted to be located at the rear of a farrowing crate during farrowing, the box having a front wall facing the rear of the sow in the farrowing crate and a forwardly extending ramp which is inclined from the front edge downwardly towards an opening in the front wall, which opening is closable by means of a top hinged flap which can swing to allow piglets to enter the box, but which cannot be opened from the inside since it is impossible for the piglets to pull the flap towards them.

The confinement chamber defined by the box disclosed in my earlier specification was intended to keep the piglets away from the mother animal while she was still giving birth and in order to keep the piglets warm, a suitable heater is suspended over the open top of the box.

This apparatus was intended to overcome the two major problems which occur during farrowing, that is crushing by the mother animal and hypothermia due to the fact that the piglets are wet at birth and can rapidly chill if there are draughts even if, as was common practice, a heater lamp were provided to attract them away from the mother animal.

It is not widely realised that a sow carries her piglets in two well defined rows within her womb and gives birth to each row whilst lying on her opposite side. This means that invariably, half way through giving birth to a litter of piglets, the sow turns over from one side the the other, and it is at this stage that any piglets born early and which may by then be suckling, stand the greatest risk of being crushed if they do not move out of the way in time. Moreover, it is known for gilts (a gilt is a sow bearing her first litter) or sows for that matter,to savage their young as a consequence of the trauma experienced during labour. The use of farrowing crates, which are sturdy cages which allow the sow to lie out and turn over, but which prevent her from turning round to savage her litter, have come into wide spread use.

By using the farrowing box described in my earlier British Patent Application No. 78.33047 crushing and hypothermia can be substantially avoided and, also I have found that even problems which become apparent later in a piglets life, such as pnuemonia and scouring are substantially eliminated due to the fact that the thermal shock normally associated with birth is stantially eliminated by confining the piglets immediately upon birth in a draught free environment.

The technical problem on which the present invention is based is that of making improvements to the farrowing box described in the above mentioned earlier Patent Application whereby closer control of the temperature within the confinement volume can be achieved and various difficulties encountered in the use of the original farrowing box have been overcome.

According to one aspect of the present invention a confinement chamber for use in farrowing including upright side, front and rear walls, the front wall having an opening therein, and an entrance ramp sloping upwards forwardly of the said opening, which latter is closable by a flap pivotally mounted so as to permit piglets arriving at the opening down the ramp to enter the interior of the chamber whilst preventing their exit is provided with a lid for closing the top of the chamber to retain heat whilst allowing ventilation for piglets in the interior of the chamber.

The advantage of the provision of a lid to the chamber is that it prevents a substantial loss of heat by convection, cuts down on the air currents within the interior of the chamber, and thus allows smaller heater lamps     to be used for heating the chamber ,effecting a considerable economy in running costs.    More accurate control of the temperature can also be obtained since the interior of the chamber is not subjected to variations in temperature due to changes taking place outside of the chamber, particularly when doors and/or windows of the building in which the chamber is located are opened or closed.    In this way a continuous and substantially unvarying temperature can be maintained even when staff are moving about within the building, entering and leaving through main doors and the like. It has been found in tests that lamps of up to 40 per cent less power consumption can be used to maintain an adequate temperature for the piglets to thrive. Indeed, where previously a 250 watt heater lamp was required a 150 watt lamp is now sufficient.

Preferably the lid comprises a main panel having laterally dependent sides defining a skirt which, when the lid is fitted in position on the chamber, is spaced from the side, front and rear walls of the chamber to define ventilation passages, means being provided to maintain the main lid panel spaced from the upper edges of the said upright walls to allow communication between the said ventilation passages and the interior of the chamber.    The said means for maintaining the lid

panels spaced from the upper edges of the upright walls may comprise upstanding spigots or studs projecting from the said upper edges. Alternatively, lateral pegs in the upright walls may be provided to engage lower edges of the skirt.

The lid is preferably adjustable in height on the said upright walls to vary the height of the chamber and ventilation available through the said ventilation passages. This makes it possible to use the chamber as a "creep" during the early life of the piglets. A "creep" is an area where piglets can be kept warm and fed away from the mother animal so that the continued danger of crushing is avoided. As the piglets get larger and more active it is essential to keep the heater lamp at a certain minimum distance away from their backs, and this is achieved by raising the lid, the heater lamp being mounted on the lid.

Adjustment of the lid height is preferably effected by supporting the lower edge of the lid skirt on pegs inserted in selected holes of a vertically spaced array thereof formed in at least two of the upright walls. The main lid panel may further be provided with additional ventilation means such as a closable opening or grille therein.

Preferably the main lid panel is further provided with an inspection window of transparent material (for example glass or plastics) which may be closable to restrict light entry or openable to allow light to enter the chamber.

According to another aspect of the present invention a confinement chamber for use during farrowing, including upright side, front and rear walls, the front wall having an opening therein, and an entrance ramp sloping upwards forwardly of the opening, which latter is closable  by a flap pivotally mounted so as to permit piglets arriving down the entrance ramp to pass through the opening into the interior of the chamber whilst preventing their exit, is provided with a flap made of a resiliently flexible material sufficiently stiff to resist bending by forces applied by the piglets.   It has been found in practice that during farrowing the sow or gilt tends to move, sometimes stretching out her rear legs,and if a rear leg should enter the chanber it will displace the flap rearwardly.   If the flap is rigid a subsequent attempt to draw the sow's leg out forwardly could give rise to a jamming or wedging action and the flexibility of the flap prevents this from causing any damage to the sow's leg.

The flap is preferably  pivotally mounted to the front wall at the upper edge of the flap and in the preferred embodiment the flap is pivotally mounted by the front wall by pivotal attachment means at each end of the upper edge of the flap, the pivotal attachment means being so arranged that the flap is removable attachable to the front wall thereby.

The flap is preferably larger than the opening so that it is turnable about its pivots only to one side of the plane defined by the front wall.

There may be provided abutment stops for limiting the closing movement of the flap such that, when closed it lies at an acute angle to the plane of the front wall. This permits a balance to be achieved between the required weight and stiffness of the flap and the forces which can be applied by very small new born piglets to ensure that the piglets enter the chamber. The said abutment stops preferably comprise adjustment screws of the like housed in threaded openings in the front walls or elements attached thereto.

The ramp with which the chamber is provided is preferably removably attached by pivotal attachment means to the front of the chamber, and in the preferred embodiment of the invention the ramp is so adapted that it is fitted to the front of the chamber after the chamber has been positioned behind a farrowing crate, the attachment between the chamber and the ramp serving to form part of the connection of the chamber to the farrowing crate in order to prevent the chamber from being displaced during farrowing. The pivoted edge of the ramp may be provided with recesses or notches therein to receive the rear legs of a farrowing crate with which the chamber is to be , used. Such notches are not required in all embodiments but allow the chamber to be used with a farrowing crate having a relatively narrow separation in between the rear legs.

The surface of the ramp is preferably a hard smooth material, such as a plastics faced chipboard and it has been found that the slope of the ramp must be relatively shallow in order to prevent the piglets from sliding down too fast and possibly rupturing the umbilical cord. A slope of 1 in 12 has been found to be entirely adequate for this purpose providing the surface is sufficiently smooth to allow the piglets to slide thereon. With a very smooth surface it is impossible for the piglets to climb up even a very shallow slope and they thus gradually work downwardly and into the chamber through the opening.

Since the sow will rest with her rump on the ramp itself, the ramp is preferably provided with a support leg in the form of a ridge or lip extending downwardly from the forward or free edge thereof for bearing the weight of the sow or gilt during farrowing. Likewise, there are preferably provided one or more support brackets on the front wall of the chamber for bearing the weight of a sow or gilt on the ramp and for transferring this weight via the chamber itself to the ground.

The ramp is also preferably provided with upright side walls to assist in guiding the piglets down the ramp to the entrance opening and also to prevent the sow from moving in such a way as to give birth to the piglets other than onto the ramp.

The chamber itself may have a horizontal floor or a floor which slopes downwardly from front to back the latter being the preferred arrangement.

In order to ensure that amniotic fluid discharged during the labour does not enter the chamber and cause saturation of the piglets there is preferably provided a grille at the entrance opening to allow drainage of liquids arriving down the ramp whereby to prevent entry of such liquids into the chamber. The grille is preferably separated from the floor of the chamber by a shallow lip. Such lip serves to arrest any of the placenta or afterbirth which may be discharged before the piglets within the chamber can received human attention.

In the preferred embodiment the container comprises a box structure in the form of a frame work of angle section frame elements supporting flat panels forming the sides, floor, front and rear walls, and the lid is likewise formed with a flat main panel and rectangular side panel defining the skirt. Like the ramp, the chamber structure is preferably made of a material faced with a smooth surface, such as plastics faced chipboard and the frame elements are preferably angle section metal such as aluminium or light alloy.

There may be further provided means for providing an indication of the commencement of farrowing by detecting the arrival of piglets into the interior of the chamber. Such indicator means preferably comprises a multi direction switch having an operating arm or lever projecting into the interior of the chamber. This requires only to project a short distance into the interior of the chamber since the newly born piglets will effectively seek it out even in the darkness due to their natural tendency to seek to suckle. After having been born, therefore, the piglets do not remain inactive but are moving about continually searching for the teat, and the operating arm or lever of a switch such as that referred to above will be nuzzled causing it to operate as the piglets attempt suck from it.

The present invention also comprehends a method of farrowing comprising confining a sow in a farrowing crate, positioning a farrowing chamber as herein before defined behind the crate in such a position that as each piglet is produced it slides down the entrance ramp, through the opening and into the interior of the chamber, and heating the said chamber to a temperature suitable for maintaining the piglets alive.

In another aspect the present invention provides a method of farrowing in which the piglets are confined after birth in a heated enclosure at the rear of the sow, into which enclosure they enter automatically by sliding down an inclined entrance ramp positioned at the rear of the sow. Alternatively, the method of rearing pigs according to the invention comprises the steps of confining the piglets immediately after their birth in the heated chamber located to the rear of the sow until all the piglets in the litter have been born before allowing the piglets access to the sow to suckle

Subsequently, the confinement chamber may be used as a heated creep until weaning. The piglet confinement chamber may be adapted to be moved to the head of the sow for use as a creep after the entire litter has been born. Alternatively, the arrangement may be such that the sow can be turned so that she has her head to the confinement chamber after all the litter has been born. It is believed that sows prefer to be able to see their litters and that keeping them in the creep at the head of the sow is better for both the mother animal and for the piglets.

The present invention also comprehends farrowing apparatus comprising, in combination, a farrowing crate (which may be of known design) and a confinement chamber as herein before defined adapted to be secured to the farrowing crate at one or each end thereof.

One embodiment of the present invention will now be more particularly described, by way of example, with reference to the accompanying drawings, in which:

Figure 1 is a general perspective view of the embodiment;

Figure 2 is a sectional side view of the embodiment illustrated in Figure 1; and

Figure 3 is a scrap sectional view of a detail showing how the lid may be adjusted in height.

Referring now to the drawings the chamber is generally indicated 11 and comprises a generally rectangular enclosure defined by a front wall 12, a rear wall 13 and two side walls 14, 15.. Each of these upright walls is defined by a flat film faced chip board panel and the panels are joined together by rectangular frame-works of aluminium angle section. In particular, the frame-work comprises two forward legs 16, 17 and two rear legs 18, 19.    These are linked by horizontal struts  at the top and bottom which are not referenced.    The front legs 16, 17 extend for approximately one inch below the strut which extends along the lower edge of each side wall 14, 15 so that a floor 19 which is supported thereby slopes downwardly from front to back.    The front edge 20 of the floor 19 is defined by a T-section  transverse strut  which also supports a grille 21 extending from side to side across the front portion of the floor 19.

The front wall 12 extends from the upper edge of the chamber to the point approximately two thirds of the way down leaving an opening 22 in the front wall defined by the lower edge of the front wall panel 12, the two front legs 16, 17 and a transverse angle section strut  23 which  spans the front legs 16, 17 and supports the front edge of the grille 21.

The opening 22 is closed by a flap 24 of resiliently flexible material, for example a relatively thick rubber approximately  1/16 of an inch thick.    The precise thickness of the  flap may vary in dependence on the material used.    Basically, it has to be sufficiently stiff to act as a flat flap when  lifted to allow piglets into the chamber, but sufficiently flexible to prevent damage should a sow get her leg trapped under the lower edge of it. The flap 24 has a rigid upper edge with projecting studs at each end, which studs are located in spring clips 25 which pivotally mount the flap 24 to the front wall 12 and allow the flap to be removable for when it is desired to allow the piglets free access in and out of the chamber through the opening 22. The angle at which the flap 24 rests is determined by abutment stops in the form of threaded screws 26 which pass through threaded openings in the front wall 12. These openings may be reinforced by suitable metal inserts.

Projecting forwardly from the lower edge of the opening 22 is an entrance ramp 26 which is removably attachable to the chamber 11. The entrance ramp 26 has an angle section support lip 27 secured along the forward edge thereof and is attached at its rear edge to the two front legs 16, 17 of the chamber 11 by attachment brackets 28, 29 which extend rearwardly from the sides of the ramp 26 and engage over pins or pegs carried by the legs 16, 17. This attachment is a relatively loose one which allows the ramp to be positioned despite variations in the dimensions of a farrowing crate to which the chamber 11 is to be attached as will be discussed below. Reinforcing brackets 30 are provided to support the rear edge of the ramp 26 against the weight of the sow during use. The ramp 26 has two side walls 31, 32 which serve as guides for the piglets in use, these side walls do not extend right to the rear of the ramp 26 in order to leave space for the rear legs of a farrowing crate to which the chamber is attached in use. The front lip 27 is of such a size that the ramp 26 slopes gently rearwardly with a slope in the region of 1 in 12

The open top of the chamber 11 defined by the upright walls 12, 13, 14, 15 is closed by a lid 33 comprising a front main panel 34 surrounded by a reinforcing frame 35 of aluminium section and having four depending side walls constituting a skirt 36. Additional reinforcing corner braces 37 may also be provided as shown in the drawings.

The lid 33 is of such a size that it fits over the upright frame members 16, 17, 18 which, because they stand proud from the associated wall panels 12, 13, 14, 15 leaves a ventilation passage 38 between the skirt 36 and the associated side wall. The upper edges of the upright walls are provided with studs 39 which space the main panel 34 of the lid a short distance above the upper edge of the upright walls so that the passages 38 allow communication between the interior of the chamber and the outside air.

The main panel 34 carries a housing 40 for a heater lamp 41, and an inspection window 42 of transparent material is let into the main panel 34 and covered by a slidable cover 43. The inspection window 42 may also be removable or openable to allow added ventilation or to gain access to the interior to the chamber 11 without removing the lid 33.

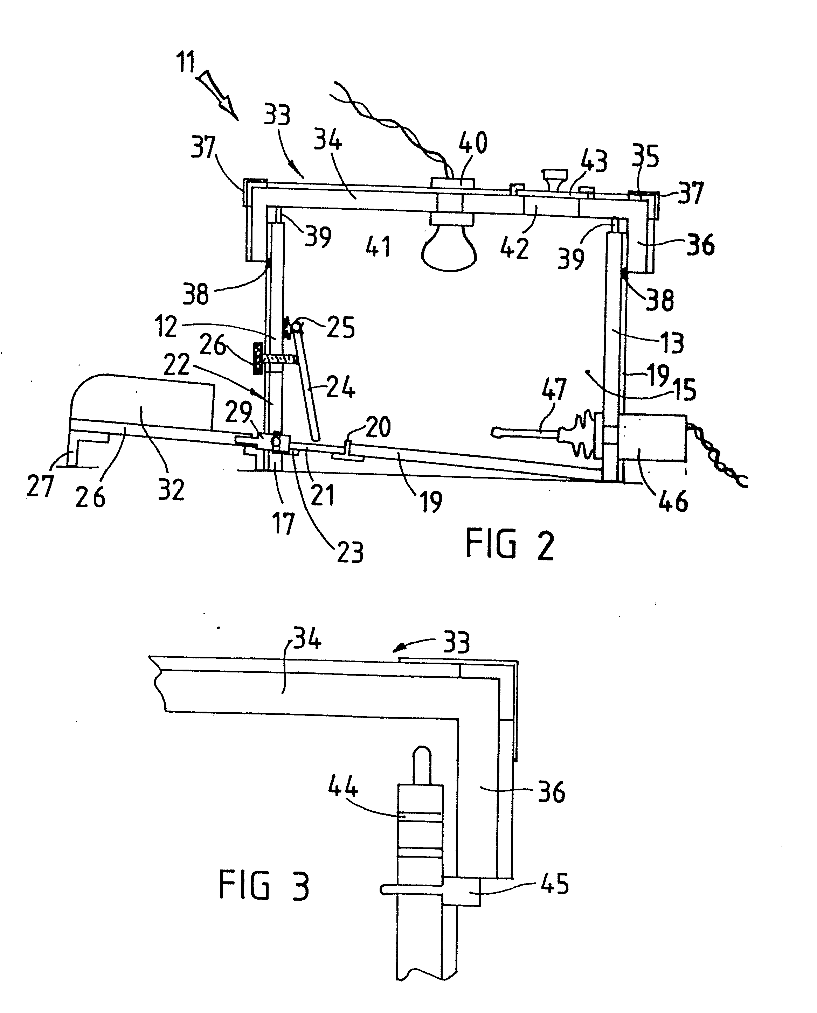

To allow use of the chamber as a creep it is necessary to raise the lid 33 as the piglets grow in order to ensure that they cannot come into contact with the heater lamp 41, whilst maintaining the heater lamp at a suitable distance from them to obtain the required heating effect. This is achieved by providing a plurality of holes 44 in at least two of the upright walls, preferably at diagonally opposite positions, and supporting the skirt 36 of the lid 33 on pegs 45 inserted in suitable holes 44 as illustrated in Figure 3.

An arrival alarm is provided in the rear wall 13, in the form of a multi position switch 46 having a projecting arm 47 which extends a short distance into the interior of the chamber. In use of the chamber during farrowing it is then only necessary to position the sow with her rump over the ramp 26 when it is apparent that labour is imminent. Constant attention is not necessary because the piglets are perfectly safe within the chamber and do not require attention for a considerable period after birth. For example, it is considered that at least 8 hours can elapse after birth before the piglets require to suckle, and they can be left longer than this quite safely. At birth the piglet is deposited on the ramp 26 which, because it is a smooth surface and because of its gentle inclination, causes the piglet to side gently down towards the flap 24. The smooth surface of the ramp 26 prevents the piglet from walking up the slope and any weak movements that it makes will only cause it to slide further down the ramp to the flap 24 where it enters the chamber. After a while, when the piglet gains a little strength, it can stand and will immediately start to suckle by searching the area for the teat. During its movements it will blunder into the arm 47 causing the switch 46 to operate and even if the original contact is only light grazing contact the piglet will nose about at the arm 47 investigating it and in this way will cause the switch 46 to operate. The switch is connected in a suitable bell or buzzer circuit or in any other circuit for providing an audible or visual indication of the tripping of the switch.

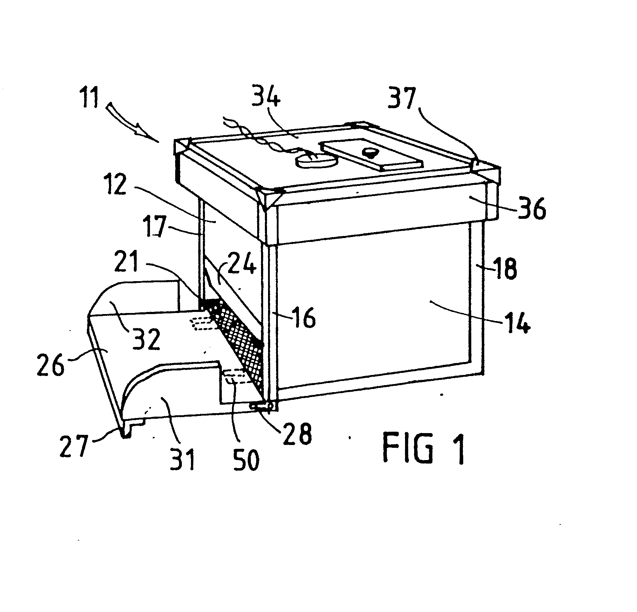

For use with farrowing crates the back legs of which are spaced at distance different from the width of the ramp 26, two recesses or notches 50, as indicated in figure 1 by the broken outline, may be provided to accommodate the rear legs of the farrowing crate.

Alternative embodiment of the present invention may be made to the same dimensions using a different manufacturing technique. For example, instead of a framed panel structure the confinement chamber may be made as a unitary injection moulded container of plastics material or other mouldable material. Alternatively, expanded polystyrene slabs may be used as the main panels, these being spray coated with a surface finishing material, such as a rigid plastics material.

The flap 24 may be replaced, in an embodiment which is not illustrated, by an array of rigid or resilient (but relatively stiff) fingers each pivotally mounted at one end or near the top edge of the opening 22 and extending downwardly to form a screen. As with the flap 24 the pivotal mounting of each finger permits it to swing inwards to allow piglet entry into the chamber 11, but prevents it from swinging outwardly so as to retain piglets in the chamber.

The ramp itself may be replaced by other means for conveying the piglets from the sow into the chamber, such as a belt conveyor or the like, activated intermittently or by the weight of an arriving piglet and suitably shrouded to prevent rubbing or chafing against the sow.

- 20 -

Claims:

1.     A confinement chamber for use in farrowing, characterised in that it comprises upright side, front and rear walls (12,13,14,15), the front wall (12) having an opening (22) therein, and means for conveying piglets through the said opening into the confinement chamber (11) the opening (22) being closable by closure means (24) mounted so as to permit piglets arriving at the opening (22) to enter the interior of the chamber (11) whilst preventing their exit, the top of the chamber (11) being substantially closed in such a way as to retain heat whilst allowing ventilation for piglets in the interior of the chamber (11).

2.     A confinement chamber according to Claim 1, characterised in that the top of the chamber (11) is closed by a cover (34) comprising a main panel having laterally dependent sides (36) defining a skirt which, when the cover is fitted in position on the chamber (11) is spaced from the side, front and rear walls (12,13,14,15) of the chamber (11) to define ventilation passages. (33), means (45) being provided to maintain the main cover panel (36) spaced from the upper edges of the said upright walls (12,13, 14,,15) to allow communication between the said ventilation passages (38) and the interior of the chamber (11).

3.     A confinement chamber according to Claim 1 or Claim 2, characterised in that the cover (36) is adjustable in height on the said upright walls (12, 13,14,15) to vary the height of the chamber (11) and also the degree of ventilation available through the said ventilation passages (38).

4.     A confinement chamber for use during farrowing, characterised in that it includes upright side, front and rear walls (12,13,14,15), the front wall (12) having an opening (22) therein, and an entrance ramp (26) sloping upwards forwardly of the opening (22), which latter is closable by closure means (24) which are mounted in such a way as to permit piglets arriving down the entrance ramp (26) to pass through the opening (22) into the interior of the chamber (11) whilst preventing their exit, the said closure means (24) being made of a resiliently flexible material which is sufficiently stiff to resist bending by forces applied by the piglets.

5.     A confinement chamber according to Claim 4, characterised in that the closure means is a flap (24) pivotally mounted to the front wall (12) at the upper edge of the flap.

- 22 -

6.    A confinement chamber according to any of Claims 1 to 4, characterised in that the closure means (24) comprise a plurality of individual elongate elements or fingers, each pivotally mounted at its upper end to the wall (12).

7.    A confinement chamber according to any preceding Claim, characterised in that the closure means (24) is removably attachable to the front wall (12) by pivotal attachment means (25).

8.    A confinement chamber according to any preceding Claim, characterised in that the chamber (11) has a floor (19) which slopes downwardly from front to back.

9.    A confinement chamber according to any preceding Claim, characterised in that there are further provided means (46,47) for providing an indication of the commencement of farrowing by detecting the arrival of piglets into the interior of the chamber (11).

10.    A method of farrowing characterised in that the piglets are automatically and immediately conveyed at birth into an enclosed chamber located to the rear of the sow.

FIG 1

FIG 2

FIG 3

## DOCUMENTS CONSIDERED TO BE RELEVANT

| Category | Citation of document with indication, where appropriate, of relevant passages | Relevant to claim |
|---|---|---|
| D,A | GB - A - 2 029 190 (C.S. LOADER et al.) <br> * abstract * | 1,10 |
| A | US - A - 4 145 993 (D. NOTARIANNI et al.) <br> * column 1, lines 1 to 64 ; fig. 1 * | 1 |
| A | US - A - 4 269 146 (C.L. LINDENMANN) | |
| A | GB - A - 775 479 (METROPOLITAN-VICKERS ELECTRICAL CO. LTD.) | |
| A | DE - U - 1 937 527 (A. SCHULZE-ROBERG) | |

**CLASSIFICATION OF THE APPLICATION (Int. Cl. ³)**

A 01 K 1/02

**TECHNICAL FIELDS SEARCHED (Int.Cl. ³)**

A 01 K 1/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 22-10-1982 | SCHOFER |

EPO Form 1503.1 06.78